(19) Europäisches Patentamt
European Patent Office
Office européen des brevets

(11) **EP 3 170 638 B1**

(12) **EUROPEAN PATENT SPECIFICATION**

(45) Date of publication and mention
of the grant of the patent:
**27.05.2020 Bulletin 2020/22**

(51) Int Cl.:
**B29B 15/12** *(2006.01)* **B29K 101/12** *(2006.01)*
**B29K 105/08** *(2006.01)* **B29C 70/06** *(2006.01)*
**B29C 70/52** *(2006.01)*

(21) Application number: **15821805.7**

(22) Date of filing: **03.06.2015**

(86) International application number:
**PCT/JP2015/066111**

(87) International publication number:
**WO 2016/009735 (21.01.2016 Gazette 2016/03)**

(54) **MANUFACTURING DEVICE AND MANUFACTURING METHOD FOR FIBER-REINFORCED THERMOPLASTIC RESIN TAPE**

HERSTELLUNGSVORRICHTUNG UND VERFAHREN ZUR HERSTELLUNG VON FASERVERSTÄRKTEM THERMOPLASTISCHEM HARZBAND

DISPOSITIF DE FABRICATION ET PROCÉDÉ DE FABRICATION DE BANDE DE RÉSINE THERMOPLASTIQUE RENFORCÉE PAR DES FIBRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.07.2014 JP 2014145899**
**29.10.2014 JP 2014220576**
**30.03.2015 JP 2015069306**

(43) Date of publication of application:
**24.05.2017 Bulletin 2017/21**

(73) Proprietor: **Kabushiki Kaisha Kobe Seiko Sho (Kobe Steel, Ltd.)**
**Kobe-shi, Hyogo 651-8585 (JP)**

(72) Inventors:
• **TASHIRO, Naoyuki**
**Takasago-shi, Hyogo 676-8670 (JP)**
• **FUJIURA, Takayasu**
**Kobe-shi, Hyogo 651-2271 (JP)**
• **SAKURAI, Yasuhiro**
**Takasago-shi, Hyogo 676-8670 (JP)**

(74) Representative: **TBK**
**Bavariaring 4-6**
**80336 München (DE)**

(56) References cited:
| EP-A2- 0 300 321 | JP-A- H01 263 005 |
| JP-A- H04 197 726 | JP-A- H04 244 809 |
| JP-A- H07 205 307 | JP-A- H07 251 437 |
| JP-A- H11 502 789 | JP-A- S50 126 065 |
| JP-A- S63 132 036 | JP-A- 2007 118 216 |
| JP-A- 2007 118 216 | JP-A- 2010 538 932 |
| JP-A- 2012 086 548 | US-A1- 2012 199 998 |

## Description

### Technical Field

The present invention relates to a manufacturing apparatus and a manufacturing method for a fiber-reinforced thermoplastic resin tape that contains continuous fibers and a thermoplastic resin with which the fibers are impregnated.

### Background Art

Patent Literature 1 discloses a carbon fiber-reinforced thermoplastic resin tape and a manufacturing method therefor. This manufacturing method involves drawing out a tape of carbon fibers impregnated with a molten resin through a downstream slit nozzle and quenching, at a predetermined or higher rate of temperature lowering, the tape immediately after having been drawn from the downstream slit nozzle by use of tape cooling means provided downstream of the downstream slit nozzle.

Patent Literature 1 indicates that it is preferable for preventing the tape from deformation to dispose a cooling roller constituting the tape cooling means at a position as close as possible to the downstream slit nozzle. According to the working examples described in Patent Literature 1, the cooling roller is disposed at such a position that the axial distance between a nozzle roller and the cooling roller is 200 mm, downstream of the downstream slit nozzle.

However, carrying out tests, the inventors have revealed that the arrangement described in Patent Literature 1 causes uneven fiber density in the manufactured fiber-reinforced thermoplastic resin tape, widthwise of the tape, further causing, in the extreme, regions in which no fibers at all but only thermoplastic resin is present or deficient portions having neither fibers nor thermoplastic resin. Patent Literature 2 discloses an apparatus for manufacturing a fiber-reinforced thermoplastic resin tape having the features of the preamble of claim 1 and a method for manufacturing a fiber-reinforced thermoplastic resin tape having the features of the preamble of claim 9. Patent Literature 3 discloses a further apparatus for manufacturing a fiber-reinforced thermoplastic resin tape.

### Citation List

### Patent Literature

Patent Literature 1: JP 2007-118216 A
Patent Literature 2: JPH10-249949
Patent Literature 3: JP 2011-148146

### Summary of Invention

It is an object of the present invention to provide an apparatus and a method that enable a fiber-reinforced thermoplastic resin tape having few defective portions to be manufactured.

The object is solved by an apparatus for manufacturing a fiber-reinforced thermoplastic resin tape having the features of claim 1 and by a method for manufacturing a fiber-reinforced thermoplastic resin tape having the features of claim 9. Advantageous further developments are set out in the dependent claims.

### Brief Description of Drawings

[Fig. 1] Fig. 1 is a schematic diagram of a manufacturing apparatus for a fiber-reinforced thermoplastic resin tape according to a first embodiment of the present invention.
[Fig. 2] Fig. 2 is an enlarged-view diagram of a feeding machine according to the first embodiment.
[Fig. 3A] Fig. 3A is a cross-sectional front-view diagram of an enlargement of a nozzle shown in Fig. 1.
[Fig. 3B] Fig. 3B is a diagram of the nozzle shown in Fig. 1 as viewed from the direction of arrow 3B in Fig. 1.
[Fig. 4A] Fig. 4A is a front-view diagram of an enlargement of a variation of the nozzle.
[Fig. 4B] Fig. 4B is a diagram of the nozzle shown in Fig. 4A as viewed from a direction corresponding to the direction of arrow 3B in Fig. 1.
[Fig. 5] Fig. 5 is a diagram of a grooved roller shown in Fig. 1 as viewed in the direction of the arrow 3B.
[Fig. 6] Fig. 6 is a plan-view diagram of a resin impregnation device shown in Fig. 1.

[Fig. 7] Fig. 7 is a cross-sectional front-view diagram of an enlargement of the nozzle and a cooling-roller section shown in Fig. 1.

[Fig. 8] Fig. 8 is a photograph depicting the appearance of a fiber-reinforced thermoplastic resin tape manufactured by use of the apparatus shown in Fig. 1.

[Fig. 9] Fig. 9 is a front-view diagram showing a first variation of the resin impregnation device and of the cooling-roller section.

[Fig. 10] Fig. 10 is a front-view diagram showing a second variation of the resin impregnation device and of the cooling-roller section.

[Fig. 11] Fig. 11 is a cross-sectional front-view diagram of an enlargement of a nozzle and of a cooling-roller section of a manufacturing apparatus for a fiber-reinforced thermoplastic resin tape according to a second embodiment of the present invention.

[Fig. 12] Fig. 12 is a photograph depicting the appearance of a fiber-reinforced thermoplastic resin tape manufactured by use of the apparatus shown in Fig. 11.

[Fig. 13] Fig. 13 is a photograph depicting the cross-section of sample No. 8 in Table 1.

[Fig. 14] Fig. 14 is a photograph depicting the cross-section of sample No. 8 in Table 1.

[Fig. 15] Fig. 15 is a photograph depicting the cross-section of sample No. 1 in Table 1.

[Fig. 16] Fig. 16 is diagram showing the relationship between thickness T and distance L of a manufactured fiber-reinforced thermoplastic resin tape, where the distance L is the distance between the tip of the nozzle and a position at which a main cooling roller and a tape-shaped fiber bundle discharged from the nozzle are in contact.

## Description of Embodiments

There will be explained below embodiments of the present invention with reference to drawings.

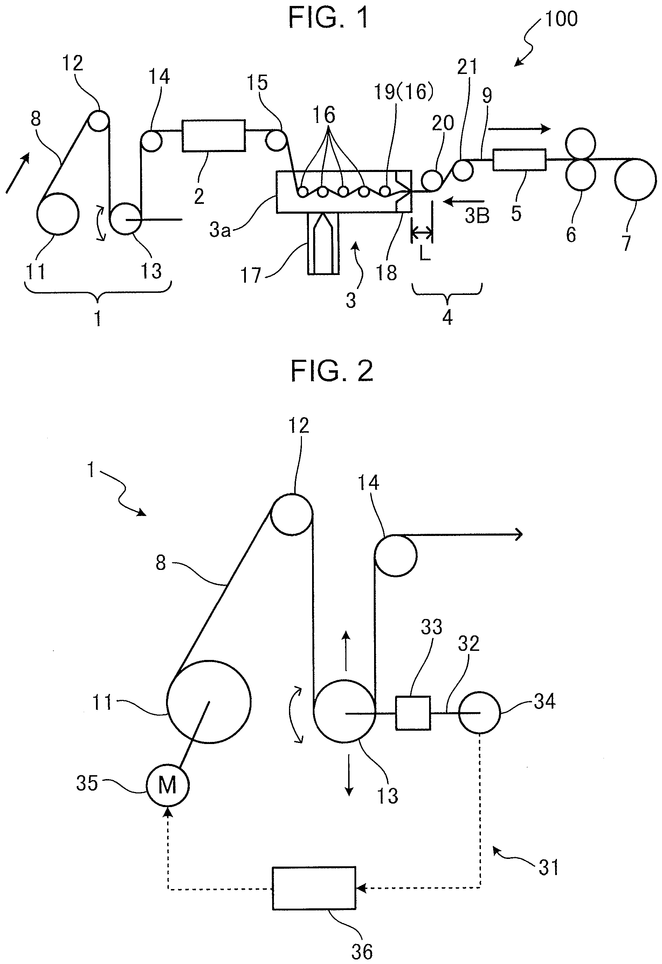

Fig. 1 shows a manufacturing apparatus for a fiber-reinforced thermoplastic resin tape 100 according to a first embodiment of the present invention. The manufacturing apparatus 100 manufactures the fiber-reinforced thermoplastic resin tape while conveying a fiber bundle 8 in a predetermined conveyance direction. The manufacturing apparatus 100 includes a feeding machine 1, a fiber pre-heating machine 2, a resin impregnation device 3, a nozzle 18, a cooling-roller section 4, a cooling section 5, a take-up machine 6 and a winding machine 7, which are sequentially lined up in the conveyance direction.

The feeding machine 1 includes a fiber bobbin 11, a guide bar 12, a dancer roller 13 and a guide roller 14.

On the fiber bobbin 11 is wound the fiber bundle 8 having a plurality of fibers, for instance, about 12,000, the fibers being bundled with each other. The fibers in the present embodiment are carbon fibers. The fibers to be used in the present invention are, however, not limited to carbon fibers; there can be also used, for instance, continuous fibers such as glass fibers, aramid fibers, ceramic fibers, metal fibers, and fibers obtained from a heterocyclic ring-containing polymer made up of polybenzothiazole, polybenzoxazole or the like. Also can be used natural plant fibers made of non-continuous fibers spun into yarns. As the above carbon fibers can be used, for instance, polyacrylonitrile (PAN)-based fibers, petroleum and coal pitch-based fibers, rayon-based fibers, lignin-based fibers and the like.

Each of the guide bar 12, the dancer roller 13 and the guide roller 14 is a member for guiding the fiber bundle 8, having a circular cross-section. The guide bar 12 is fixed so as to be prevented from rotation about the center thereof, whereas the dancer roller 13 and the guide roller 14 are disposed so as to be allowed to rotate about the centers thereof. In addition, the dancer roller 13 is vertically movable.

The fiber bundle 8 is paid out from the fiber bobbin 11 and is conveyed while making contact with the guide bar 12, the dancer roller 13 and the guide roller 14. A certain tension is applied to the fiber bundle 8 at this time. The tension is adjusted mainly by the dancer roller 13.

As shown in Fig. 2, the feeding machine 1 has a tension adjustment mechanism 31 for keeping the tension that is applied to the fiber bundle 8 constant. The tension adjustment mechanism 31 has a rod member 32 having opposite ends one of which is connected to the shaft of the dancer roller 13, a tension-adding weight 33 attached to the rod member 32, an angle detector 34 connected to the rod member 32, a motor 35 that rotates the fiber bobbin 11, and a controller 36.

To the dancer roller 13 is applied a given downward force corresponding to the weight that acts on the tension-adding weight 33. The angle detector 34 supports the other of the opposite ends of the rod member 32, the other end being the end opposite to the end connected to the shaft of the dancer roller 13, so as to allow the other end to rotate about the horizontal axis, and the angle detector 34 detects the rotation angle of the rod member 32.

The motor 35 and the angle detector 34 are electrically connected to the controller 36. The controller 36 adjusts the rotational speed of the motor 35 in accordance with the angle detected by the angle detector 34, thereby keeping constant the tension of the fiber bundle 8 paid out from the fiber bobbin 11. This allows the fiber bundle 8 to be opened stably in the resin impregnation device 3 described below. The tension of the fiber bundle 8, in the present embodiment, is controlled to, for instance, 300 g. The travel speed of the fiber bundle 8 is, for instance, 3 m/min.

The means for keeping the tension of the fiber bundle 8 paid out from the fiber bobbin 11 constant is not limited to the tension adjustment mechanism 31 above. For instance, the tension of the fiber bundle 8 can be also kept constant by a unit including a detector that detects the travel speed of the fiber bundle 8, a detector that detects the rotational speed of the fiber bobbin 11, and an element that calculates the diameter of the fiber bundle 8 wound on the fiber bobbin 11, on the basis of the detected travel speed and rotational speed, and that adjusts the braking torque of the fiber bobbin 11 through operation of a powder clutch or the like. For manufacturing a wide tape, it is preferable that the fibers to form the tape are paid out from a plurality of fiber bobbins 11. For instance, it is preferable that a plurality of feeding machines each corresponding to the feeding machine 1 are disposed parallel to each other.

As shown in Fig. 1, the fiber bundle 8 paid out from the feeding machine 1 is fed to the fiber pre-heating machine 2. The fiber pre-heating machine 2 heats the fiber bundle 8 to about 100°C, thereby softening a sizing agent that is adhered to the fiber bundle 8. The sizing agent is an agent for sizing a plurality of fibers to facilitating handling the fibers. Softening of the sizing agent facilitates opening the fiber bundle 8 in a subsequent process and facilitates impregnation of the fiber bundle 8 with a thermoplastic resin. Known equipment can be used herein as the fiber pre-heating machine 2.

The fiber bundle 8 unloaded from the fiber pre-heating machine 2 is fed to the resin impregnation device 3 via the guide roller 15. The guide roller 15, having a circular cross-section, is rotated about the center thereof. Instead of the guide roller 15, there can be also used a guide bar having a circular cross-section but being non-rotatable about the center thereof.

The resin impregnation device 3 is to open the fiber bundle 8 and to impregnate the fiber bundle 8 with a molten thermoplastic resin. The resin impregnation device 3 has a container 3a, an extruder 17 and a plurality of impregnation rollers 16.

The container 3a, shaped like an cylinder elongate in the conveyance direction of the fiber bundle 8, accommodates molten thermoplastic resin in the container 3. The temperature of the molten thermoplastic resin in the container 3a is, for instance, 230°C. The container 3a has an outlet which allows the fiber bundle having been impregnated with the thermoplastic resin to be discharged out of the container 3a through the outlet.

The extruder 17 supplies the molten thermoplastic resin to the interior of the container 3a. The thermoplastic resin has an appropriate MFR. The MFR, which is an index of the flowability (Melt Flow Rate) of a synthetic resin, is set to, for instance, an arbitrary value within a range of 30 to 115 (g/10 min).

In the present embodiment, the thermoplastic resin is polypropylene. The thermoplastic resin to be used in the present invention is, however, not limited to polypropylene. As the thermoplastic resin can be also used, for instance, acrylonitrile-butadiene-styrene copolymers (ABS), polyamide (nylon 6, nylon 66), polyacetal, polycarbonate, high-density polyethylene, low-density polyethylene, linear low-density polyethylene, polyethylene terephthalate, polybutylene terephthalate, polyether imide, polystyrene, polyether sulfone, polyphenylene sulfide, polyether ketone, polyether ether ketone and the like.

Each of the plurality of impregnation rollers 16 is an impregnation member disposed inside the container 3a. The impregnation rollers 16 are spaced at a predetermined interval along the conveyance direction of the fiber bundle 8. The intervals between the impregnation rollers 16 do not have to be regular. Each of the impregnation rollers 16 has a circular cross-section and rotates about the center thereof, thereby conveying the fiber bundle 8 downstream in the conveyance direction while making contact with the fiber bundle 8. At least a part of the plurality of impregnation rollers 16 may be a guide bar having a circular cross-section but being non-rotatable about the center thereof.

The fiber bundle 8 zigzags in the container 3a accommodating the molten thermoplastic resin, while making contact with the plurality of impregnation rollers 16. Specifically, the fiber bundle 8 passes through the interior of the container 3a in the conveyance direction while alternately coming into contact with the lower face of a specific impregnation roller 16 and the top face of the subsequent impregnation roller 16. The impregnation rollers 16 open the passing fiber bundle 8 and, furthermore, the opened fiber bundle 8 is impregnated with the molten thermoplastic resin.

The number of impregnation rollers 16 is adjusted in accordance with the degree of fiber opening in the fiber bundle 8 and the degree of impregnation of the fiber bundle 8 with the thermoplastic resin. The excessive number of impregnation rollers 16 causes excessive opening of the fiber bundle 8 to thereby increase the fiber density at widthwise opposite ends of the fiber bundle 8. The excessive number of impregnation rollers 16 further causes excessive tension acting on the fiber bundle 8 to allow fiber breakage to easily occur. On the other hand, the insufficient number of impregnation rollers 16 fails to perform sufficient opening of the fiber bundle 8, thereby increasing the fiber density at the widthwise center of the fiber bundle 8 and/or disabling the fiber bundle 8 from being sufficiently impregnated with the thermoplastic resin.

The nozzle 18 is provided to the outlet of the container 3a. The nozzle 18 allows the fiber bundle 8 having been discharged from the interior of the container 3a to pass through the nozzle 18, while shaping the form of the fiber bundle 8. The nozzle 18 has an opening, which is a rectangular slit s having long sides and short sides. The fiber bundle 8, having passed through the tape nozzle 18, is therefore formed into a flat tape shape. In summary, the nozzle 18 allows the fiber bundle 8 impregnated with the thermoplastic resin to pass therethrough while forming the fiber bundle 8 into a tape shape. The fiber bundle 8 impregnated with the thermoplastic resin and having passed through the nozzle 18 is referred to hereafter as a tape 9. The temperature of the nozzle 18 is, for instance, 230°C.

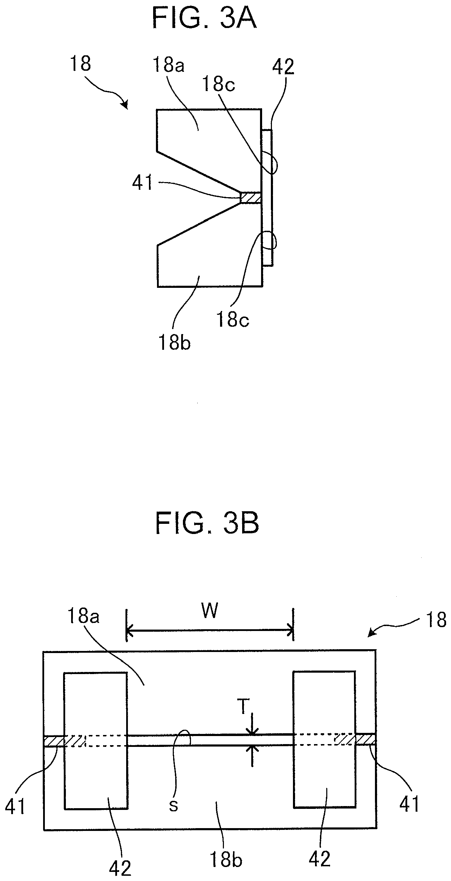

Fig. 3A is an enlarged-view diagram of the nozzle 18, and Fig. 3B is a diagram showing the nozzle 18 as viewed in the direction of arrow 3B of Fig. 1. As shown in Fig. 3A and Fig. 3B, the nozzle 18 has a pair of nozzle members 18a, 18b. In the present embodiment, the pair of nozzle members 18a, 18b are arrayed vertically, having respective surfaces vertically opposed to each other. The surfaces have respective tip-side portions, namely, a tip-side inner surface 18c of the nozzle member 18a and a tip-side inner surface 18c of the nozzle member 18b, the surfaces having their respective normals perpendicular to the conveyance direction of the fiber bundle 8.

The nozzle 18 according to the first embodiment further includes a left-right pair of shims 41 and a left-right pair of guide plates 42.

The pair of shims 41 are sandwiched between the left and right ends of the nozzle member 18a and the left and right ends of the nozzle member 18b, respectively, thereby defining the vertical dimension of the clearance between the tip-side inner surfaces 18c of the nozzle members 18a, 18b. This dimension corresponds to the dimension T of the short sides of the rectangle forming the slit s. In other words, the pair of shims 41 enables the rectangular slit s having a minor axis of the dimension T to be formed between the nozzle members 18a, 18b. The fiber-reinforced thermoplastic resin tape is manufactured by passing the fiber bundle 8 through the slit s, and the thickness of the fiber-reinforced thermoplastic resin tape is controlled herein to the thickness of the slit s which is the opening of the tip of the nozzle 18, that is, to the dimension T of the short sides of the opening.

The pair of guide plates 42 is disposed, at the tip of the nozzle 18, so as to hinder the shims 41 from contact with the fiber bundle 8 passing through the nozzle 18. The pair of guide plates 42 is attached to the open portion of the tip of the nozzle 18 through screws or the like. The pair of guide plates 42 are disposed with a spacing W between the pair of guide plates 42. The spacing W has a dimension corresponding to the width of the fiber-reinforced thermoplastic resin tape to be manufactured, and corresponds to the dimension of the long sides of the rectangle forming the slit s. The fiber bundle 8 is thereby shaped so that the width of the fiber bundle 8 that passes through the opening of the nozzle 18 coincides with the width of the fiber-reinforced thermoplastic resin tape to be manufactured. In the present embodiment the spacing W of the pair of guide plates 42, i.e., the width of the fiber-reinforced thermoplastic resin tape to be manufactured, is 15 mm. The concrete dimension of the spacing W is, however, not limited. The above dimension T and spacing W, that is, the thickness and width of the fiber-reinforced thermoplastic resin tape to be manufactured, can be easily modified by replacement of the shims 41 and/or modification of the positions of the pair of guide plates 42.

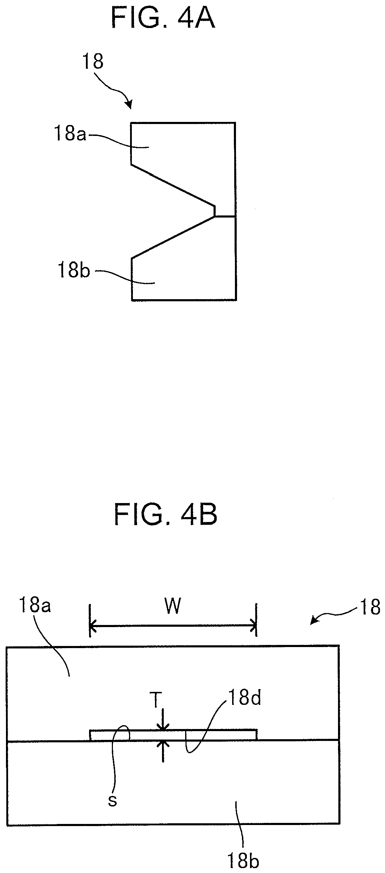

Fig. 4A and Fig. 4B are diagrams showing an enlargement of a variation of the nozzle 18. As shown in Fig. 4A and Fig. 4B, at least one member in the pair of nozzle members 18a, 18b (the nozzle member 18a in Fig. 4A and Fig. 4B) may be formed with a groove 18d that defines the slit s. This configuration eliminates necessity of the pair of shims 41 and the pair of guide plates 42 to allow the number of parts to be reduced. Besides, replacement of the nozzle member formed with the groove 18d allows the width and thickness of the fiber-reinforced thermoplastic resin tape to be manufactured to be easily modified.

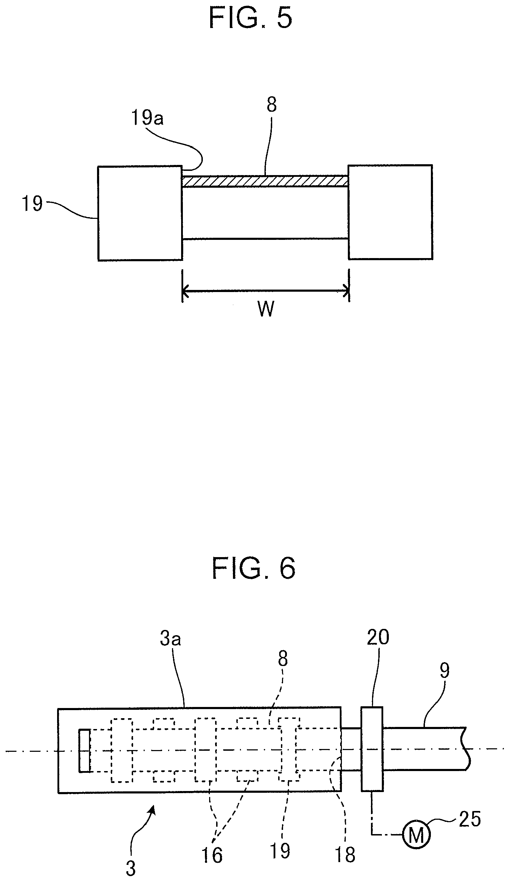

Among the plurality of impregnation rollers 16 shown in Fig. 1, the impregnation roller 16 closest to the nozzle 18 is a grooved roller 19 provided with a groove 19a as shown in Fig. 5. The present embodiment includes a single grooved roller 19, while it is also possible to provide two or more grooved rollers at respective positions near the nozzle 18. If the impregnation member is a guide bar provided instead of the impregnation rollers 16, it is also possible that the guide bar has a groove.

Fig. 5 is a diagram showing the grooved roller 19 viewed from the direction of arrow 3B in Fig. 1. As shown in Fig. 5, the groove 19a is provided in the axial center of the grooved roller 19, having a width equal to the spacing W between the pair of guide plates 42, i.e., equal to the width of the fiber-reinforced thermoplastic resin tape to be manufactured. The fiber bundle 18 is conveyed so as to pass through the groove 19a. The grooved roller 19 thus prevents the width of the fiber bundle 8 that is opened from exceeding the target width of the fiber-reinforced thermoplastic resin tape to be manufactured.

In view of the convenience in modifying the width of the fiber-reinforced thermoplastic resin tape, the impregnation rollers 16 upstream of the grooved roller 19 is permitted to be groove-less flat rollers. In contrast, it is also permitted that all the impregnation rollers 16 may be grooved rollers 19.

As shown in Fig. 6 which is a plan-view diagram of the resin impregnation device 3, the center of the fiber bundle 8, the center of the nozzle 18 and the center of the grooved roller 19 are coincident with one another. The coincidence of the centers makes it possible to suppress the occurrence of bias in the density of fibers within the fiber-reinforced thermoplastic resin tape to be manufactured. Fig. 6 shows also a main cooling roller 20, described below, together with the resin impregnation device 3.

As shown in Fig. 1, the tape 9 having passed through the nozzle 18 is fed to the cooling-roller section 4. The cooling-roller section 4 includes the main cooling roller 20 and a sub-cooling roller 21 which are aligned in this order from the upstream side to the downstream side of the conveyance direction of the tape 9. Each of the main cooling roller 20 and the sub-cooling roller 21 has a circular cross-section and is rotatable about the center thereof. The main cooling roller 20 and the sub-cooling roller 21 are supplied with cooling water through a rotary joint (not shown), the cooling water keeping the temperature of the main cooling roller 20 and of the sub-cooling roller 21 at a constant temperature (for instance about 20°C). The main cooling roller 20, disposed directly downstream of the nozzle 18, makes contact with the tape 9 at a predetermined contact position to cool the tape 9 while feeding the tape 9 in the downstream direction. The sub-cooling roller 21, disposed downstream of the main cooling roller 20, further cools the tape 9 while feeding the tape 9 in the downstream direction. The tape 9 makes surface contact with the main cooling roller 20 and the cooling roller 21 over respective predetermined contact areas.

The tape 9 having passed through the nozzle 18 has a temperature equal to or higher than the melting point of the thermoplastic resin. Accordingly, the thermoplastic resin in the tape 9 immediately after having passed through the nozzle 18 is not solidified, which is likely to cause widthwise uneven fiber density in the width direction during conveyance of the tape 9. For the reason, the main cooling roller 20 is disposed so as to firstly and quickly cool the tape 9 immediately after having passed through the nozzle 18. The main cooling roller 20 according to the first embodiment cools the top face shown in Fig. 1, which is also a front face of the tape 9. The tape 9 is further cooled by the downstream sub-cooling roller 21. The sub-cooling roller 21 cools the lower face shown in Fig. 1, which is also a back surface of the tape 9. The thermoplastic resin in the tape 9 thereby solidifies before the occurrence of uneven fiber density in the width direction of the tape 9. The sub-cooling roller 21 is disposed so as to hinder the uneven cooling in the thickness direction of the tape 9 from causing "warping" of the tape 9.

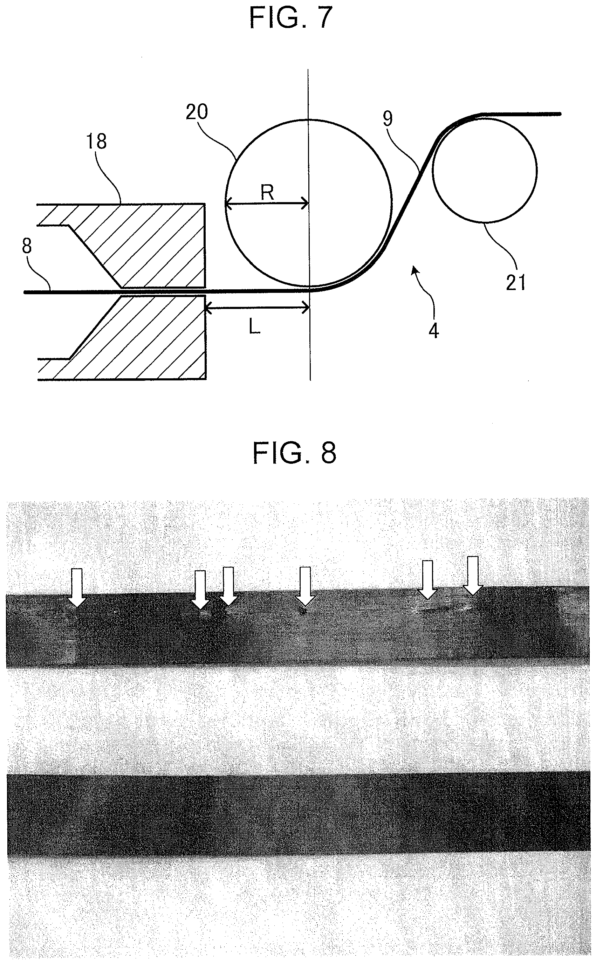

Fig. 7 is an enlarged-view diagram of the nozzle 18 and the cooling-roller section 4. The distance L shown in Fig. 7, that is, the distance between the tip of the nozzle 18 and the above contact position at which the main cooling roller 20 and the tape 9 makes contact with each other, is set on the basis of the dimension T (width of the slit s shown in Fig. 3B) of the short sides of the opening of the tip of the nozzle 18. Specifically, the dimension T (mm) and the distance L (mm) are set so as to satisfy either one of Expression (A) and Expression (B) below.

$$L \leq 1000 \times T - 35; \quad T < 0.08 \quad \cdots \quad (A)$$

$$L \leq 785.7 \times T - 17.9; \quad T \geq 0.08 \quad \cdots \quad (B)$$

The contact position is an end point of the distance L when the tip of the nozzle 18 regards as a starting point, and is also the position at which the tape 9 leaving the nozzle 18 comes first in contact with the main cooling roller 20. The main cooling roller 20 and the tape 9 make surface contact with each other, over a predetermined contact area, at that position and in a specific region downstream of that position. The contact position is, therefore, the position of the upstream end of the region over which the tape 9 and the main cooling roller 20 make contact with each other.

As described above, quick cooling of the tape 9 directly after having passed through the nozzle 18 by use of the main cooling roller 20 solidifies the thermoplastic resin before the occurrence of uneven density in the fibers to thereby suppress the uneven fiber density widthwise of the tape 9.

Preferably, the distance L between the tip of the nozzle 18 and the contact position at which the fiber bundle 8 comes first in contact with the main cooling roller 20 is set to be 5 mm or greater. Making the distance L be small requires a small diameter of the main cooling roller 20, whereas the main cooling roller 20 has to have a certain size of diameter for possession of the necessary strength and necessary cooling capacity. From this point of view, preferable is that the distance L is set to 5 mm or greater as well.

The peripheral speed of the cooling roller 20 is set to a speed higher than the travel speed of the tape 9 (that is, the fiber bundle 8 having passed through the nozzle 18). For instance, the peripheral speed of the main cooling roller 20 is set to lie in the range from 1.5 times to 2.0 times the travel speed of the tape 9.

The peripheral speed of the main cooling roller 20, if being comparable to the travel speed of the tape 9, generates a possibility of phenomenon where a part of the thermoplastic resin with which the fiber bundle 8 is impregnated adheres to the surface of the main cooling roller 20. The thermoplastic resin thus adhered to the surface of the main cooling roller 20 forms partial irregularities on the surface of the tape 9, which may detract from the smoothness of the surface of the tape 9.

Fig. 8 is a photograph depicting the appearance of manufactured fiber-reinforced thermoplastic resin tapes. Among the two fiber-reinforced thermoplastic resin tapes shown in Fig. 8, the lower tape has a smooth surface whereas the upper tape has partial irregularities on the surface, at sites indicated by the arrows.

As means for suppressing the above irregularities, it is effective to provide a roller drive unit including a motor 25 or the like such as the one shown in Fig. 6 for rotating the main cooling roller 20 to thereby make the peripheral speed of the main cooling roller 20 higher than the travel speed of the tape 9. This makes it possible to suppress the phenomenon of adhesion of part of the molten thermoplastic resin onto the surface of the main cooling roller 20. The peripheral speed of the main cooling roller 20 only has to be a speed which can cause slipping between the tape 9 and the main cooling roller 20. In consideration with the lifespan of the parts of the apparatus, the peripheral speed of the main cooling roller 20 lies preferably in the range of 1.5 times to 2.0 times the travel speed of the tape 9, i.e., the travel speed of the fiber bundle 8 that has passed through the nozzle 18.

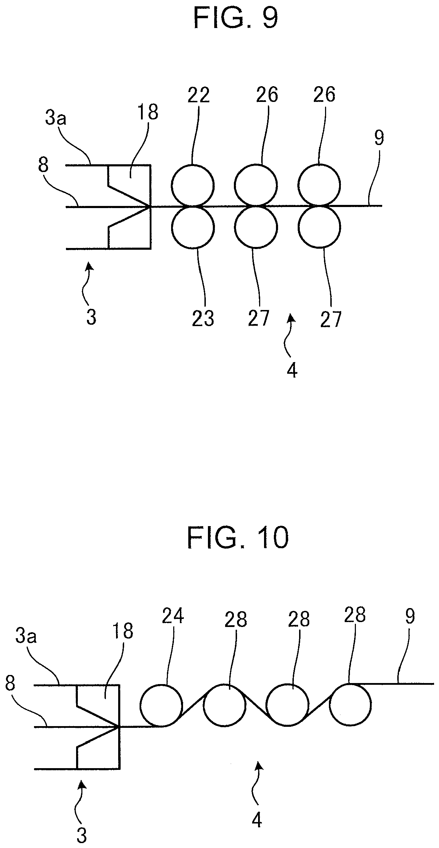

Fig. 9 shows an enlargement of a first variation of the resin impregnation device 3 and the cooling-roller section 4. As shown in Fig. 9, there may be provided, instead of the single main cooling roller 20, a pair of main cooling rollers 22, 23 disposed so as to sandwich the tape 9. Furthermore, as the sub-cooling roller provided downstream of the pair of main cooling rollers 22, 23, there may be provided at least one pair (in Fig. 9, two pairs lined up in the conveyance direction of the tape 9) of sub-cooling rollers 26, 27. The pair of main cooling rollers 22, 23 can cool simultaneously the front surface and the back surface of the tape 9 to protect either one of the front and back surfaces from biased cooling and thereby restraint effectively the tape 9 from warping due to the above biased cooling.

Fig. 10 shows a second variation of the resin impregnation device 3 and the cooling-roller section 4. As shown in Fig. 10, it is possible to align a single main cooling roller 24 and at least one sub-cooling roller 28 (three in Fig. 10, lined up the conveyance direction of the tape 9) in the conveyance direction to convey the tape 9 zigzag with contact of the tape 9 with the cooling rollers 24, 28,... In other words, the tape 9 may be conveyed downstream while alternately undergoing cooling of the front surface of the tape 9 through contact with the main cooling roller 24 and even-numbered sub-cooling rollers 28 and cooling of the back surface of the tape 9 through contact with the odd-numbered sub-cooling rollers 28. The arrangement shown in Fig. 10, in which the total contact area between the plurality of cooling rollers 24, 28 and the tape 9 is larger than the total contact area between the main cooling roller 20 and the sub-cooling roller 21 shown in Fig. 7 and the tape 9, enables the tape 9 to be cooled more efficiently.

The tape 9 having been thus cooled in the cooling-roller section 4 is fed to the cooling section 5 shown in Fig. 1. The cooling section 5 cools the tape 9 with water. The cooling section 5 is, for instance, a cooling water pool. The cooling section 5 may cool the tape 9 by air cooling. It is also permitted to omit the cooling section 5 if the cooling by the cooling-roller section 4 is sufficient.

The tape 9 having been cooled in the cooling section 5 is fed to the take-up machine 6 shown in Fig. 1. The take-up machine 6 takes up the cooled tape 9. The winding machine 7 winds the tape 9 having been taken up by the take-up machine 6. The take-up machine 6 causes the tape 9, and hence the fiber bundle 8, to travel at a predetermined speed. For the sake of a simple configuration, the winding machine 7 may be prescribed to function as a take-up machine 6, i.e., to take up the tape 9, and also to have the function of causing the tape 9 to travel at a predetermined speed.

As described above, in the present embodiment, the distance L between the tip of the nozzle 18 and the contact position at which the main cooling roller 20 and the tape 9 come first in contact with each other is set to satisfy either one of Expression (A) and Expression (B), regarding the relationship between the distance L and the dimension T of the short sides of the opening of the tip of the nozzle 18. Specifically, although the thermoplastic resin in the tape 9 immediately after having passed through the nozzle 18 is not solidified and widthwise uneven fiber density tends to occur during conveyance of the tape 9, the main cooling roller 20 disposed so as to satisfy the above Expression (A) or Expression (B) is able to cool quickly the tape 9 immediately after the tape 9 has passed through the nozzle 18 to solidify the thermoplastic resin before the occurrence of the widthwise uneven fiber density of the tape 9; this allows the occurrence of the widthwise uneven fiber density of the tape 9 to be reduced.

Specifically, the distance L between the tip of the nozzle 18 and the position at which the main cooling roller 20 and the tape 9 are in contact with each other is set so as to satisfy Expression (A) when the dimension T of the short sides of the opening of the tip of the nozzle 18 (that is, width of the slit s shown in Fig. 3B) is smaller than 0.08 mm, and so as to satisfy Expression (B) when the dimension T of the short sides of the opening of the tip of the nozzle 18 is 0.08 mm or greater. This makes it possible to solidify the thermoplastic resin in the tape 9 suitably before the occurrence of the widthwise uneven fiber density. If the distance L satisfies Expressions (A) and (B), the cooling roller need not stand any closer to the nozzle.

Besides, disposing at least one sub-cooling roller 21 in addition to the main cooling roller 20 makes is possible to cool the tape 9 more thoroughly. Furthermore, cooling both of the front surface and the back surface of the tape 9 by respective main and sub-cooling rollers 20, 21 makes it possible to exhibit the tape 9 from warping more effectively than the case where only one of the front surface and the back surface alone of the tape 9 is cooled by a single main cooling roller, which may fail to exhibit warping of the tape 9.

Moreover, the configuration where the resin impregnation device 3 includes a plurality of impregnation members and at least the impregnation member closet to the nozzle 18 of the impregnation members is the above-mentioned grooved roller 19 having the groove 19a that has a width equal in dimension to the width of the fiber-reinforced thermoplastic resin tape to be manufactured and that allows the fiber bundle 8 to pass therethrough makes it possible to prevent the width of the opened fiber bundle 8 from exceeding the width of the fiber-reinforced thermoplastic resin tape to be manufactured. This enables a fiber-reinforced thermoplastic resin tape having a desired width to be manufactured.

In the first embodiment, the nozzle 18 includes the pair of guide plates 42 that are attached to an open portion of the tip of the nozzle 18, the guide plates 42 being spaced by a dimension equal to the width of the fiber-reinforced thermoplastic resin tape to be manufactured. The pair of guide plates 42 facilitate coinciding the width of the fiber bundle 8 that passes through the opening of the nozzle 18 with the target width of the fiber-reinforced thermoplastic resin tape to be manufactured. This allows a fiber-reinforced thermoplastic resin tape having a desired width to be easily manufactured. Furthermore, even when widthwise uneven fiber density is caused in the fiber bundle 8 that passes through the opening of the nozzle 18, the fiber density is rendered widthwise uniform, simultaneously with shaping of the width of the fiber bundle 8. This makes it possible to distribute the fibers uniformly widthwise of the reinforced thermoplastic resin tape to be manufactured.

Besides, in the first embodiment, keeping the tension that acts on the fiber bundle 8 constant enhances the above effect of suppressing the uneven fiber density. Significant fluctuation in the tension acting on the fiber bundle 8 in the container 3a of the resin impregnation device 3 could make the fiber opening in the fiber bundle 8 be unstable to thereby cause widthwise uneven fiber density; in contrast, keeping the tension that acts on the fiber bundle 8 constant allows the fiber bundle 8 to be opened stably, thereby restraining the widthwise uneven fiber density. This makes it possible to distribute the fibers uniformly widthwise of the fiber-reinforced thermoplastic resin tape to be manufactured. Moreover, keeping the tension that acts on the fiber bundle 8 constant allows the fiber bundle 8 to advance stably in a straight line.

Besides, the peripheral speed of the main cooling roller 20 higher than the travel speed of the tape 9 (the fiber bundle 8 having passed through the nozzle 18), preferably being in the range of 1.5 times to 2.0 times the travel speed of the tape 9, prevents the phenomenon of adhesion of part of the molten thermoplastic resin onto the surface of the main cooling roller 20, thereby making it possible to manufacturing a fiber-reinforced thermoplastic resin tape with smooth surface.

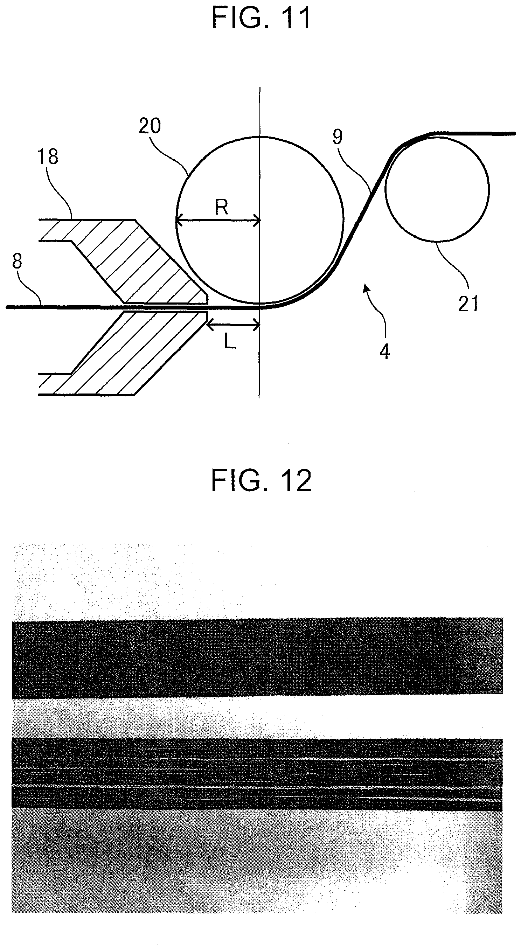

Fig. 11 is an enlarged-view diagram of the nozzle 18 and the cooling-roller section 4 according to a second embodiment of the present invention. The nozzle 18 according to the present embodiment has a shape whose dimension in a direction parallel to the minor axis of the opening decreases towards the main cooling roller 20, i.e., a tapered shape. This shape allows a part of the main cooling roller 20 to be disposed upstream of the tip of the nozzle 18. Specifically, it allows the main cooling roller 20 to be disposed at such a position that the distance L between the tip of the nozzle 18 and the contact position at which the main cooling roller 20 and the tape 9 come into contact with each other is smaller than the radius R of the main cooling roller 20. In the second embodiment shown in Fig. 11, the main cooling roller 20 is thus disposed at such a position that the distance L between the tip of the nozzle 18 and the contact position between the cooling roller 20 and the tape 9 is smaller than the radius R of the cooling roller 20. Besides, the above shape makes it possible to increase the radius R of the main cooling roller 20 while making the distance L be smaller than the radius R of the main cooling roller 20. This allows the tape 9 to be more quickly cooled immediately after the tape 9 has passed through the nozzle 18. Furthermore, the radius R of the cooling roller 20 can be made larger in spite of the above arrangement, which allows the cooling roller 20 to be upsized. This enhances the cooling capacity of the cooling roller 20, allowing the tape 9 to be cooled efficiently.

Next will be explained the reasons why it is effective that the distance L and the dimension T satisfy the above Expression (A) or Expression (B).

To find out an appropriate range of the above distance L, the inventors manufactured fiber-reinforced thermoplastic resin tapes with dissimilar parameters, and carried out tests for evaluating the presence of defective portions where thermoplastic resin and/or carbon fibers were absent (hereafter, defective portions). A bundle of 12,000 carbon fibers TORAYCA T300 by TORAY INDUSTRIES, INC. was used herein as the fiber bundle 8. Polypropylene was used as the thermoplastic resin. The travel speed of the fiber bundle 8 was set to 3 m/min. Respective parameters were set for the distance L (mm) between the tip of the nozzle 18 and the position at which the cooling roller 20 and the tape 9 came in contact with each other (hereafter referred to as distance L), the dimension T (mm) of the short sides of the slit s corresponding to the thickness of the fiber-reinforced thermoplastic resin tape to be manufactured, and the MFR (melt flow rate) of the resin, which is an index of the flowability of a synthetic resin. The thickness of the fiber-reinforced thermoplastic resin tape to be manufactured was set to be identical to the dimension T (see Fig. 3B) of the short sides of the opening of the tip of the nozzle 18 (hereafter, the thickness of the tape may in some instances be notated as thickness T).

Part of the test results is given in Table 1.

[Table 1]

|  | Sample | Tape width (mm) | Tape thickness (mm) | Resin MFR (g/10 min) | Distance L (mm) | Defective portions |
|---|---|---|---|---|---|---|
| Example | 1 | 15 | 0.06 | 30 | 10 | Absence |
|  | 2 | 15 | 0.07 | 115 | 10 | Absence |
|  | 3 | 15 | 0.08 | 115 | 10 | Absence |
|  | 4 | 15 | 0.08 | 115 | 45 | Absence |
|  | 5 | 12.4 | 0.08 | 30 | 45 | Absence |
| Comp. ex. | 6 | 15 | 0.06 | 30 | 45 | Presence |
|  | 7 | 15 | 0.06 | 30 | 180 | Presence |
|  | 8 | 15 | 0.07 | 115 | 45 | Presence |
|  | 9 | 15 | 0.07 | 115 | 180 | Presence |
|  | 10 | 15 | 0.08 | 115 | 180 | Presence |
|  | 11 | 13 | 0.07 | 115 | 180 | Presence |
|  | 12 | 12.4 | 0.08 | 30 | 180 | Presence |

Fig. 12 is a photograph depicting respective appearances of manufactured fiber-reinforced thermoplastic resin tapes. In the appearance photograph, the width of the fiber-reinforced thermoplastic resin tape is 15 mm, the black portions are carbon fibers, and the white portions are portions from which carbon fibers are absent, namely, defective portions. Fig. 12 shows an upper one including no white portions and a lower one including white portions.

The evaluation comes to the conclusion that a distance L of 10 mm involves no defective portions regardless of the thickness T of the tape and regardless of the MFR whereas a distance L of 180 mm involves defective portions regardless of the thickness T of the tape and regardless of the MFR; a distance L of 45 mm involves no defective portions in the case where the thickness T of the tape is 0.08 mm but involves defective portions in the case where that the thickness T of the tape is 0.06 mm or 0.07 mm.

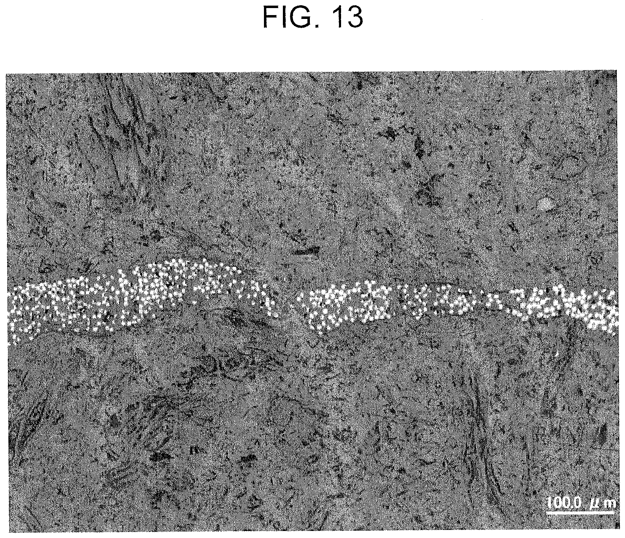

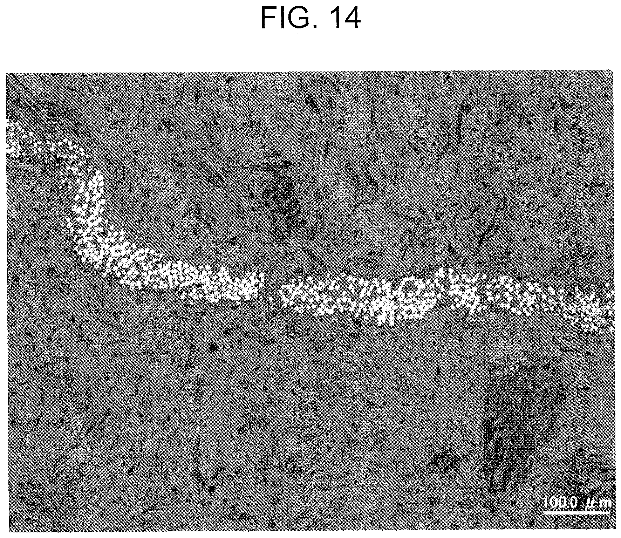

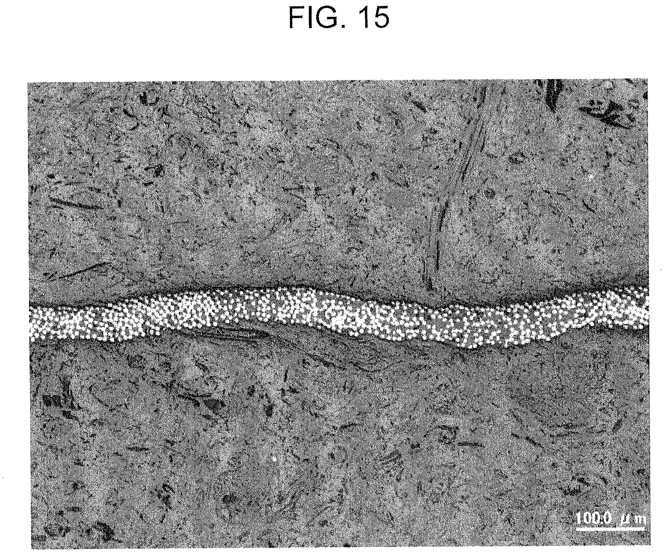

Each of Fig. 13 and Fig. 14 is a photograph depicting a cross-section of sample No. 8. Fig. 13 shows the existence of defective portions from which either thermoplastic resin or carbon fibers is absent. Fig. 13 shows the existence of defective portions from which thermoplastic resin is absent. Fig. 15 is a photograph depicting a cross-section of sample No. 1. Fig. 15 shows a homogeneous distribution of the thermoplastic resin and the carbon fibers.

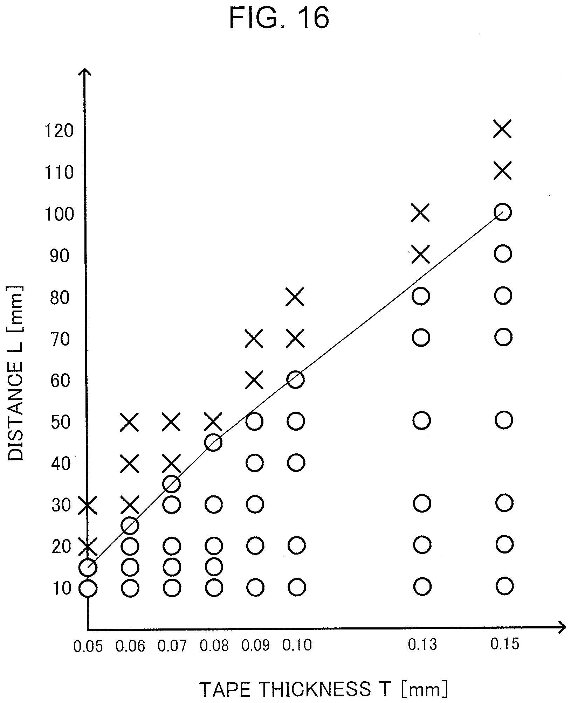

Fig. 16 shows other overall results upon manufacture of a fiber-reinforced thermoplastic resin tape having a width of 15 mm as described above. Fig. 16 shows the relationship between the dimension T of the short sides of the opening of the tip of the nozzle 18 and the distance L between the tip of the nozzle 18 and the position at which the cooling roller 20 and the tape 9 are in contact with each other. As same as above, the thickness of the manufactured fiber-reinforced thermoplastic resin tape is regarded as one equal to the dimension T (see Fig. 3B) of the short sides of the opening of the tip of the nozzle 18, being notated as thickness T. In the figure, each symbol (O) denotes an instance where there occurred no defective portions from which carbon fibers are absent. In the figure, each symbol (x) denotes an instance where there occurred defective portions from which carbon fibers are absent.

The results of the above test clearly indicate that the distance L (mm) satisfying Expression (A) below when the thickness T of the tape, i.e., the dimension T (mm) of the short sides, is smaller than 0.08 mm and the distance L (mm) satisfying Expression (B) below when the thickness T of the tape, i.e., the dimension T (mm) of the short sides, is 0.08 mm or greater enable a fiber-reinforced thermoplastic resin tape having few defective portions to be manufactured.

$$L \le 1000 \times T - 35 \quad \cdots \quad (A)$$

$$L \le 785.7 \times T - 17.9 \quad \cdots \quad (B)$$

Embodiments of the present invention have been explained above, but these embodiments merely illustrate concrete examples with no intention to the limitation of the present invention; the specific configuration of the invention can be modified as appropriate. Functions and effects described in the embodiments of the present invention amount merely to an enumeration of the most preferable functions and effects that are elicited by the present invention, and are not limited to those functions and effects of the invention having been described in the embodiments of the present invention.

For instance, while each of the embodiments of the present invention described above includes the resin impregnation device 3 having a function of opening the fiber bundle 8, the present invention is not limited thereto. For example, it is also possible to provide a fiber opening machine disposed upstream of the resin impregnation device 3, more specifically disposed between the fiber pre-heating machine 2 and the resin impregnation device 3, the fiber opening machine being configured to open the fiber bundle 8. Alternatively, it is also possible that a fiber bundle having been already opened is wound on the fiber bobbin 11 and then paid out from the feeding machine 1.

As described above, provided are a device and a method that enable a fiber-reinforced thermoplastic resin tape having few defective portions to be manufactured.

Provided is an apparatus for manufacturing a fiber-reinforced thermoplastic resin tape, the apparatus comprising: a resin impregnation device for impregnating a fiber bundle with a molten thermoplastic resin, the resin impregnation device including a container that accommodates the fiber bundle and the thermoplastic resin with which the fiber bundle is to be impregnated, the container having an outlet allowing the fiber bundle impregnated with the thermoplastic resin to be discharged through the outlet; a nozzle provided to the outlet of the container of the resin impregnation device and configured to allow the fiber bundle having been impregnated with the thermoplastic resin to pass through the nozzle while forming the fiber bundle into a tape shape; and at least one main cooling roller disposed downstream of the nozzle and configured to downstream feed the fiber bundle having passed through the nozzle while cooling the tape-shaped fiber bundle. The nozzle has an opening allowing the fiber bundle to pass through the opening, the opening being a rectangular slit having long sides and short sides. In this apparatus, with T (mm) being the dimension of the short sides of a tip of the nozzle and L (mm) being a distance between the tip of the nozzle and the contact position, the dimension T and the distance L in the apparatus satisfy either one of Expression (A) and Expression (B) below.

$$L \leq 1000 \times T - 35; \quad T < 0.08 \quad \cdots \quad (A)$$

$$L \leq 785.7 \times T - 17.9; \quad T \geq 0.08 \quad \cdots \quad (B)$$

According to this device, disposing the main cooling roller so as to let the distance L satisfy the above Expression (A) or Expression (B) enables the fiber bundle immediately after coming out of the nozzle to be quickly cooled by the main cooling roller, thereby enabling the thermoplastic resin to be solidified before widthwise uneven fiber density occurs. This suppresses the widthwise uneven fiber density in the tape.

The distance L (mm) is preferably set to be 5 mm or greater.

In this apparatus, it is preferable that the nozzle has a tapered shape such that the dimension of the nozzle in a direction parallel to the short sides decreases towards the at least one main cooling roller, and the main cooling roller is disposed at such a position that the distance between the tip of the nozzle and the contact position is smaller than a radius of the main cooling roller. The shape of the nozzle allows a part of the main cooling roller to be disposed upstream of the tip of the nozzle, thereby making it possible to increase the radius R of the main cooling roller while making the distance L smaller than the radius R of the main cooling roller. This allows the main cooling roller to be upsized to increase the cooling capacity thereof, while reducing the distance L.

The at least one main cooling roller may include a pair of main cooling rollers disposed on both sides of the fiber bundle with the tape shape, and the pair of main cooling rollers cool the fiber bundle while making contact with both faces of the fiber bundle, respectively. The pair of main cooling rollers is capable of cool both faces of the fiber bundle simultaneously to thereby effectively suppress warping of the tape due to biased cooling of either one of the faces.

The above device may further include at least one sub-cooling roller disposed downstream of the at least one main cooling roller and configured to convey the fiber bundle while cooling the fiber bundle.

It is preferable that: the resin impregnation device further includes a plurality of impregnation members disposed in the container, each impregnation member having a circular cross-section and making contact with the fiber bundle; at least a impregnation member including the impregnation member closest to the nozzle, from among the plurality of the impregnation members, has a groove having a width in a direction parallel to a width of the fiber-reinforced thermoplastic resin tape to be manufactured and allows the fiber bundle to pass through the groove. The impregnation member having the above groove allows the width of the opened fiber bundle to be prevented from exceeding the width of the fiber-reinforced thermoplastic resin tape to be manufactured, thereby enabling a fiber-reinforced thermoplastic resin tape having a desired width to be manufactured.

The nozzle preferably includes a nozzle member that defines the dimension of the opening in a minor axis direction and a pair of guide plates attached to a tip of the nozzle member with a spacing defining the dimension of the opening in a major axis direction between the guide plates. In this nozzle, the major axis and the minor axis of the opening can be easily adjusted through replacing the nozzle member and/or modifying the positions of the pair of guide plates.

Preferably, the apparatus further includes a tension adjustment mechanism that keeps tension acting on the fiber bundle constant. The tension adjustment mechanism, keeping the tension constant, enhances the effect of suppressing the above uneven fiber density.

The apparatus further includes a roller drive unit that rotates the main cooling roller at a peripheral speed higher than a travel speed of the fiber bundle, preferably at a peripheral speed 1.5 times to 2.0 times the travel speed. The roller drive unit causes the main cooling roller to slip against the fiber bundle to thereby restraint the thermoplastic resin in the fiber bundle from adhering to the main cooling roller, enabling a fiber-reinforced thermoplastic resin tape of smooth surface to be manufactured.

Also provided is a method for manufacturing a fiber-reinforced thermoplastic resin tape, the method including: a resin impregnation step of impregnating a fiber bundle with a molten thermoplastic resin; a nozzle passage step of passing the fiber bundle having been impregnated with the thermoplastic resin in the resin impregnation step through an opening of a nozzle, the opening being a rectangular slit having long sides and short sides, to thereby form the fiber bundle into a tape shape; and a cooling step of bringing the tape-shaped fiber bundle after having passed through the opening into contact with at least one main cooling roller disposed downstream of the nozzle to thereby cooling the fiber bundle while feeding downstream the fiber bundle direction. In this method, with T (mm) being the dimension of the short sides of a tip of the nozzle, and L (mm) being a distance between a tip of the nozzle and a contact position at which the fiber bundle comes first into contact with the main cooling roller, the dimension T and the distance L satisfy in this method either one of Expression (A) and Expression (B) below.

$$L \leq 1000 \times T - 35; \ T < 0.08 \ \cdots \ (A)$$

$$L \leq 785.7 \times T - 17.9; \ T \geq 0.08 \ \cdots \ (B)$$

Also in this method, the main cooling roller is rotated at a peripheral speed higher than a travel speed of the fiber bundle, preferably at a peripheral speed 1.5 times to 2.0 times the travel speed.

## Claims

1. An apparatus for manufacturing a fiber-reinforced thermoplastic resin tape, the apparatus comprising:

   a resin impregnation device (3) for impregnating a fiber bundle (8) with a molten thermoplastic resin, the resin impregnation device (3) including a container (3a) that accommodates the fiber bundle (8) and the thermoplastic resin with which the fiber bundle (8) is to be impregnated, the container (3a) having an outlet allowing the fiber bundle (8) impregnated with the thermoplastic resin to be discharged through the outlet;
   a nozzle (18) provided to the outlet of the container (3a) of the resin impregnation device (3) and configured to allow the fiber bundle (8) having been impregnated with the thermoplastic resin to pass through the nozzle (18) while forming the fiber bundle (8) into a tape shape (9); and
   at least one main cooling roller (20) disposed downstream of the nozzle (18) and configured to feed downstream the fiber bundle (9) having passed through the nozzle (18) and cool the fiber bundle (9) while making contact with the tape-shaped fiber bundle (9), wherein:

   the nozzle (18) has an opening allowing the fiber bundle (8) to pass through the nozzle (18), the opening being a rectangular slit (s) having long sides and short sides; and
   with T (mm) being the dimension of the short sides of a tip of the nozzle (18) and L (mm) being a distance between the tip of the nozzle (18) and the contact position, the dimension T and the distance L in the apparatus satisfy either one of Expression (A) and Expression (B) below:

$$L \leq 1000 \times T - 35; \ T < 0.08 \ \cdots \ (A)$$

$$L \leq 785.7 \times T - 17.9; \quad T \geq 0.08 \cdots (B);$$

**characterized by** comprising
a roller drive unit (25) that rotates the at least one main cooling roller (20) at a peripheral speed of the main cooling roller (20), the peripheral speed being higher than a travel speed of the fiber bundle (9).

2. The manufacturing apparatus for a fiber-reinforced thermoplastic resin tape according to claim 1, wherein the nozzle (18) has a tapered shape such that the dimension of the nozzle (18) in a direction parallel to the short sides decreases towards the at least one main cooling roller (20), and the main cooling roller (20) is disposed at such a position that the distance L between the tip of the nozzle (18) and the contact position is smaller than a radius R of the main cooling roller (20).

3. The manufacturing apparatus for a fiber-reinforced thermoplastic resin tape according to claim 1, wherein the at least one main cooling roller (20) includes a pair of main cooling rollers (22, 23) disposed on both sides of the fiber bundle (9) with the tape shape, and the pair of main cooling rollers (22, 23) cool the fiber bundle (9) while making contact with both faces of the fiber bundle (9), respectively.

4. The manufacturing apparatus for a fiber-reinforced thermoplastic resin tape according to claim 1, further comprising at least one sub-cooling roller (21) disposed downstream of the at least one main cooling roller (20) and configured to convey the fiber bundle (9) while cooling the fiber bundle (9).

5. The manufacturing apparatus for a fiber-reinforced thermoplastic resin tape according to claim 1, wherein: the resin impregnation device (3) further includes a plurality of impregnation members (16, 19) disposed in the container (3a); each impregnation member (16, 19) has a circular cross-section and makes contact with the fiber bundle (8); and at least an impregnation member (19) including the impregnation member (19) closest to the nozzle (18), from among the plurality of the impregnation members (16, 19), has a groove (19a) having a width in a direction parallel to a width of the fiber-reinforced thermoplastic resin tape to be manufactured and allows the fiber bundle (8) to pass through the groove (19a).

6. The manufacturing apparatus for a fiber-reinforced thermoplastic resin tape according to claim 1, wherein the nozzle (18) includes a nozzle member (18a, 18b; 41) that defines the dimension (T) of the opening (s) in a minor axis direction and a pair of guide plates (42) attached to a tip of the nozzle member (18a, 18b; 41) with a spacing defining the dimension (W) of the opening (s) in a major axis direction between the guide plates (42).

7. The manufacturing apparatus for a fiber-reinforced thermoplastic resin tape according to claim 1, further comprising a tension adjustment mechanism (31) that keeps tension acting on the fiber bundle (8) constant.

8. The manufacturing apparatus for a fiber-reinforced thermoplastic resin tape according to claim 1, wherein the roller drive unit (25) rotates the at least one main cooling roller (20) at a peripheral speed of the main cooling roller (20), the peripheral speed being 1.5 times to 2.0 times the travel speed of the fiber bundle (9).

9. A method for manufacturing a fiber-reinforced thermoplastic resin tape, the method comprising:

a resin impregnation step of impregnating a fiber bundle (8) with a molten thermoplastic resin;
a nozzle passage step of passing the fiber bundle (8) having been impregnated with the thermoplastic resin in the resin impregnation step through an opening of a nozzle (18), the opening being a rectangular slit (s) having long sides and short sides, to thereby form the fiber bundle (8) into a tape shape (9); and
a cooling step of bringing the tape-shaped fiber bundle (9) after having passed through the opening into contact with at least one main cooling roller (20) disposed downstream of the nozzle (18) to thereby cooling the fiber bundle (9) while feeding downstream the fiber bundle (8) direction,
wherein, with T (mm) being the dimension of the short sides of a tip of the nozzle (18), and L (mm) being a distance between a tip of the nozzle (18) and a contact position at which the fiber bundle (9) comes first into contact with the main cooling roller (20), the dimension T and the distance L satisfy in this method either one of Expression (A) and Expression (B) below:

$$L \le 1000 \times T - 35;\ T < 0.08 \cdots (A)$$

$$L \le 785.7 \times T - 17.9;\ T \ge 0.08 \cdots (B);$$

**characterized in that**
the at least one main cooling roller (20) is rotated at a peripheral speed of the main cooling roller (20), the peripheral speed being higher than a travel speed of the fiber bundle (9).

10. The manufacturing method for a fiber-reinforced thermoplastic resin tape according to claim 9, wherein the at least one main cooling roller (20) is rotated at a peripheral speed of the main cooling roller (20), the peripheral speed being 1.5 times to 2.0 times the travel speed of the fiber bundle (9).

**Patentansprüche**

1. Vorrichtung zum Herstellen eines faserverstärkten thermoplastischen Harzbands, mit:

einem Harztränkgerät (3) zum Tränken eines Faserbündels (8) mit einem geschmolzenen thermoplastischen Harz, wobei das Harztränkgerät (3) einen Behälter (3a) hat, der das Faserbündel (8) und das thermoplastische Harz aufnimmt, mit welchem das Faserbündel (8) zu tränken ist, wobei der Behälter (3a) einen Austritt hat, der es dem Faserbündel (8), das mit dem thermoplastischen Harz getränkt ist, ermöglicht, durch den Austritt abgegeben zu werden;
einer Düse (18), die an dem Austritt des Behälters (3a) des Harztränkgeräts (3) vorgesehen und konfiguriert ist, es dem Faserbündel (8), das mit dem thermoplastischen Harz getränkt wurde, zu ermöglichen, durch die Düse (18) hindurchzugehen, während sie das Faserbündel (8) in eine Bandform (9) formt; und
mindestens einer Hauptkühlwalze (20), die stromabwärts von der Düse (18) angeordnet und konfiguriert ist, das durch die Düse (18) hindurchgegangene Faserbündel (9) stromabwärts zu befördern und das Faserbündel (9) zu kühlen, während sie mit dem bandförmigen Faserbündel (9) in Kontakt steht, wobei:

die Düse eine Öffnung hat, die es dem Faserbündel (8) ermöglicht, durch die Düse (18) hindurchzugehen, wobei die Öffnung ein rechteckiger Schlitz (s) mit langen Seiten und kurzen Seiten ist; und
wenn T (mm) die Abmessung der kurzen Seiten einer Spitze der Düse (18) ist und L (mm) ein Abstand zwischen der Spitze der Düse (18) und der Kontaktposition ist, erfüllen die Abmessung T und der Abstand L in der Vorrichtung einen von dem Ausdruck (A) und Ausdruck (B), die nachfolgen:

$$L \le 1000 \times T - 35;\ T < 0{,}08 \cdots (A)$$

$$L \le 785{,}7 \times T - 17{,}9;\ T \ge 0{,}08 \cdots (B);$$

**gekennzeichnet durch**:
eine Walzenantriebseinheit (25), die die mindestens eine Hauptkühlwalze (20) mit einer Umfangsgeschwindigkeit der Hauptkühlwalze (20) dreht, wobei die Umfangsgeschwindigkeit höher liegt als eine Laufgeschwindigkeit des Faserbündels (9).

2. Herstellungsvorrichtung für ein faserverstärktes thermoplastisches Harzband nach Anspruch 1, wobei die Düse (18) eine abgeschrägte Form hat, sodass die Abmessung der Düse (18) in einer zu den kurzen Seiten parallelen Richtung in Richtung auf die mindestens eine Hauptkühlwalze (20) abnimmt, und die Hauptkühlwalze (20) an einer solchen Position angeordnet ist, dass der Abstand L zwischen der Spitze der Düse (18) und der Kontaktposition kleiner ist als ein Radius R der Hauptkühlwalze (20).

3. Herstellungsvorrichtung für ein faserverstärktes thermoplastisches Harzband nach Anspruch 1, wobei die mindestens eine Hauptkühlwalze (20) ein Paar von Hauptkühlwalzen (22, 23) hat, die auf beiden Seiten des Faserbündels (9) mit der Bandform angeordnet sind, und das Paar von Hauptkühlwalzen (22, 23) das Faserbündel (9) kühlt, während sie jeweils mit beiden Flächen des Faserbündels (9) in Kontakt stehen.

4. Herstellungsvorrichtung für ein faserverstärktes thermoplastisches Harzband nach Anspruch 1, ferner mit mindestens einer Hilfskühlwalze (21), die stromabwärts von der mindestens einen Hauptkühlwalze (20) angeordnet und konfiguriert ist, das Faserbündel (9) zu transportieren, während sie das Faserbündel (9) kühlt.

5. Herstellungsvorrichtung für ein faserverstärktes thermoplastisches Harzband nach Anspruch 1, wobei: das Harztränkgerät (3) ferner eine Vielzahl von Tränkbauteilen (16, 19) hat, die in dem Behälter (3a) angeordnet sind; jedes Tränkbauteil (16, 19) einen kreisförmigen Querschnitt hat und in Kontakt mit dem Faserbündel (8) steht; und mindestens ein Tränkbauteil (19) einschließlich des der Düse (18) am nächsten liegenden Tränkbauteils (19) unter der Vielzahl von Tränkbauteilen (16, 19) eine Nut (19a) hat, die eine Breite in einer zu einer Breite des herzustellenden faserverstärkten thermoplastischen Harzbands parallelen Richtung hat und es dem Faserbündel (8) ermöglicht, durch die Nut (19a) hindurchzugehen.

6. Herstellungsvorrichtung für ein faserverstärktes thermoplastisches Harzband nach Anspruch 1, wobei die Düse (18) ein Düsenbauteil (18a, 18b; 41) hat, das die Abmessung (T) der Öffnung (s) in einer Nebenachsenrichtung definiert, und ein Paar von Führungsplatten (42) hat, die an einer Spitze des Düsenbauteils (18a, 18b; 41) angeordnet sind, wobei ein Zwischenraum zwischen den Führungsplatten (42) die Abmessung (W) der Öffnung (s) in einer Hauptachsenrichtung definiert.

7. Herstellungsvorrichtung für ein faserverstärktes thermoplastisches Harzband nach Anspruch 1, ferner mit einem Vorspannungseinstellmechanismus (31), der eine auf das Faserbündel (8) wirkende Vorspannung konstant hält.

8. Herstellungsvorrichtung für ein faserverstärktes thermoplastisches Harzband nach Anspruch 1, wobei die Walzenantriebseinheit (25) die mindestens eine Hauptkühlwalze (20) mit einer Umfangsgeschwindigkeit der Hauptkühlwalze (20) rotieren lässt, wobei die Umfangsgeschwindigkeit das 1,5- bis 2,0-fache der Laufgeschwindigkeit des Faserbündels (9) beträgt.

9. Verfahren zum Herstellen eines faserverstärkten thermoplastischen Harzbands, das Verfahren mit:

einem Harztränkschritt zum Tränken eines Faserbündels (8) mit einem geschmolzenen thermoplastischen Harz; einem Düsendurchführschritt zum Durchführen des Faserbündels (8), das in dem Harztränkschritt mit dem thermoplastischen Harz getränkt worden ist, durch eine Öffnung einer Düse (18), wobei die Öffnung ein rechteckiger Schlitz (s) mit langen Seiten und kurzen Seiten ist, um damit das Faserbündel (8) in eine Bandform (9) zu formen; und einem Kühlschritt zum Inkontaktbringen des bandförmigen Faserbündels (9), nachdem es durch die Öffnung hindurchgegangen ist, mit mindestens einer Hauptkühlwalze (20), die stromabwärts von der Düse (18) angeordnet ist, um dadurch das Faserbündel (9) zu kühlen, während das Faserbündel (8) stromabwärts befördert wird, wobei, wenn T (mm) die Abmessung der kurzen Seiten einer Spitze der Düse (18) ist, und L (mm) ein Abstand zwischen einer Spitze der Düse (18) und einer Kontaktposition ist, an welcher das Faserbündel (9) mit der Hauptkühlwalze (20) erstmals in Kontakt kommt, die Abmessung T und der Abstand L bei diesem Verfahren einen von dem Ausdruck (A) und Ausdruck (B) erfüllen, die nachfolgen:

$$L \leq 1000 \times T - 35; \quad T < 0{,}08 \cdots (A)$$

$$L \leq 785{,}7 \times T - 17{,}9; \quad T \geq 0{,}08 \cdots (B);$$

**dadurch gekennzeichnet, dass**
die mindestens eine Hauptkühlwalze (20) mit einer Umfangsgeschwindigkeit der Hauptkühlwalze (20) gedreht wird, wobei die Umfangsgeschwindigkeit höher liegt als eine Laufgeschwindigkeit des Faserbündels (9).

10. Herstellungsverfahren für ein faserverstärktes thermoplastisches Harzband nach Anspruch 9, wobei die mindestens eine Hauptkühlwalze (20) mit einer Umfangsgeschwindigkeit der Hauptkühlwalze (20) gedreht wird, wobei die Umfangsgeschwindigkeit 1,5- bis 2,0-fache der Laufgeschwindigkeit des Faserbündels (9) beträgt.

**Revendications**

1. Appareil pour fabriquer une bande de résine thermoplastique renforcée en fibres, l'appareil comprenant :

un dispositif d'imprégnation de résine (3) pour imprégner un faisceau de fibres (8) avec une résine thermoplastique en fusion, le dispositif d'imprégnation de résine (3) comprenant un récipient (3a) qui loge le faisceau de fibres (8) et la résine thermoplastique avec laquelle le faisceau de fibres (8) doit être imprégné, le récipient (3a) ayant une sortie permettant au faisceau de fibres (8) imprégné avec la résine thermoplastique d'être déchargé par la sortie ;
une buse (18) prévue à la sortie du récipient (3a) du dispositif d'imprégnation de résine (3) et configurée pour permettre au faisceau de fibres (8) ayant été imprégné avec la résine thermoplastique de passer à travers la buse (18) tout en formant le faisceau de fibres (8) en une forme de bande (9) ; et
au moins un rouleau de refroidissement principal (20) disposé en aval de la buse (18) et configuré pour alimenter en aval le faisceau de fibres (9) qui est passé à travers la buse (18) et refroidir le faisceau de fibres (9) tout en établissant le contact avec le faisceau de fibres en forme de bande (9), dans lequel :

la buse (18) a une ouverture permettant au faisceau de fibres (8) de passer à travers la buse (18), l'ouverture étant une fente rectangulaire (s) ayant des côtés longs et des côtés courts ; et
avec T (mm) qui est la dimension des côtés courts d'une pointe de la buse (18) et L (mm) qui est une distance entre la pointe de la buse (18) et la position de contact, la dimension T et la distance L dans l'appareil satisfont l'une ou l'autre parmi l'expression (A) et l'expression (B) ci-dessous :

$$L \leq 1000 \times T - 35 \; ; \; T < 0{,}08 \; ... \; (A)$$

$$L \leq 785{,}7 \times T - 17{,}9 \; ; \; T \geq 0{,}08 \; ... \; (B) \; ;$$

**caractérisé en ce qu'**il comprend :
une unité d'entraînement de rouleau (25) qui fait tourner le au moins un rouleau de refroidissement principal (20) à une vitesse périphérique du rouleau de refroidissement principal (20), la vitesse périphérique étant supérieure à une vitesse de déplacement du faisceau de fibres (9).

2. Appareil de fabrication pour une bande de résine thermoplastique renforcée en fibres selon la revendication 1, dans lequel la buse (18) a une forme progressivement rétrécie de sorte que la dimension de la buse (18) dans une direction parallèle aux côtés courts diminue vers le au moins un rouleau de refroidissement principal (20), et le rouleau de refroidissement principal (20) est disposé dans une position telle que la distance L entre la pointe de la buse (18) et la position de contact est inférieure à un rayon R du rouleau de refroidissement principal (20).

3. Appareil de fabrication pour une bande de résine thermoplastique renforcée en fibres selon la revendication 1, dans lequel le au moins un rouleau de refroidissement principal (20) comprend une paire de rouleaux de refroidissement principaux (22, 23) disposés des deux côtés du faisceau de fibres (9) avec la forme de bande, et la paire de rouleaux de refroidissement principaux (22, 23) refroidit le faisceau de fibres (9) tout en établissant le contact avec les deux faces du faisceau de fibres (9) respectivement.

4. Appareil de fabrication pour une bande de résine thermoplastique renforcée en fibres selon la revendication 1, comprenant en outre au moins un rouleau de sous-refroidissement (21) disposé en aval du au moins un rouleau de refroidissement principal (20) et configuré pour transporter le faisceau de fibres (9) tout en refroidissant le faisceau de fibres (9).

5. Appareil de fabrication pour une bande de résine thermoplastique renforcée en fibres selon la revendication 1, dans lequel : le dispositif d'imprégnation de résine (3) comprend en outre une pluralité d'éléments d'imprégnation (16, 19) disposés dans le récipient (3a) ; chaque élément d'imprégnation (16, 19) a une section transversale circulaire et établit le contact avec le faisceau de fibres (8) ; et au moins un élément d'imprégnation (19) comprenant l'élément d'imprégnation (19) de plus proche de la buse (18), parmi la pluralité d'éléments d'imprégnation (16, 19), a une rainure (19a) ayant une largeur dans une direction parallèle à une largeur de la bande de résine thermoplastique renforcée en fibres à fabriquer et permet au faisceau de fibres (8) de passer à travers la rainure (19a).

**6.** Appareil de fabrication pour une bande de résine thermoplastique renforcée en fibres selon la revendication 1, dans lequel la buse (18) comprend un élément de buse (18a, 18b ; 41) qui définit la dimension (T) de l'ouverture (s) dans une direction d'axe mineur et une paire de plaques de guidage (42) fixée à une pointe de l'élément de buse (18a, 18b ; 41) avec un espacement définissant la dimension (W) de l'ouverture (s) dans une direction d'axe majeur entre les plaques de guidage (42).

**7.** Appareil de fabrication pour une bande de résine thermoplastique renforcée en fibres selon la revendication 1, comprenant en outre un mécanisme d'ajustement de tension (31) qui maintient la tension agissant sur le faisceau de fibres (8) constante.

**8.** Appareil de fabrication pour une bande de résine thermoplastique renforcée en fibres selon la revendication 1, dans lequel l'unité d'entraînement de rouleau (25) fait tourner le au moins un rouleau de refroidissement principal (20) à une vitesse périphérique du rouleau de refroidissement principal (20), la vitesse périphérique représentant de 1,5 fois à 2,0 fois la vitesse de déplacement du faisceau de fibres (9).

**9.** Procédé pour fabriquer une bande de résine thermoplastique renforcée en fibres, le procédé comprenant :

une étape d'imprégnation de résine pour imprégner un faisceau de fibres (8) avec une résine thermoplastique en fusion ;
une étape de passage de buse pour faire passer le faisceau de fibres (8) qui a été imprégné avec la résine thermoplastique à l'étape d'imprégnation de résine, par une ouverture d'une buse (18), l'ouverture étant une fente rectangulaire (s) ayant des côtés longs et des côtés courts, pour former ainsi le faisceau de fibres (8) en une forme de bande (9) ; et
une étape de refroidissement pour amener le faisceau de fibres en forme de bande (9), après être passé par l'ouverture, en contact avec au moins un rouleau de refroidissement principal (20) disposé en aval de la buse (18) pour refroidir ainsi le faisceau de fibres (9) tout en alimentant le faisceau de fibres (8) dans la direction en aval, dans lequel avec T (mm) qui est la dimension des côtés courts d'une pointe de la buse (18), et L (mm) qui est une distance entre une pointe de la buse (18) et une position de contact dans laquelle le faisceau de fibres (9) vient tout d'abord en contact avec le rouleau de refroidissement principal (20), la dimension T et la distance L satisfont dans ce procédé, l'une ou l'autre parmi l'expression (A) et l'expression (B) ci-dessous :

$$L \leq 1000 \times T - 35 \; ; \; T < 0,08 \; \ldots \; (A)$$

$$L \leq 785,7 \times T - 17,9 \; ; \; T \geq 0,08 \; \ldots \; (B) \; ;$$

**caractérisé en ce que** :
le au moins un rouleau de refroidissement principal (20) tourne à une vitesse périphérique du rouleau de refroidissement principal (20), la vitesse périphérique étant supérieure à une vitesse de déplacement du faisceau de fibres (9) .

**10.** Procédé de fabrication pour une bande de résine thermoplastique renforcée en fibres selon la revendication 9, dans lequel le au moins un rouleau de refroidissement principal (20) tourne à une vitesse périphérique du rouleau de refroidissement principal (20), la vitesse périphérique représentant de 1,5 fois à 2,0 fois la vitesse de déplacement du faisceau de fibres (9).

# FIG. 1

# FIG. 2

# FIG. 3A

# FIG. 3B

# FIG. 4A

# FIG. 4B

# FIG. 5

# FIG. 6

# FIG. 7

# FIG. 8

# FIG. 9

# FIG. 10

# FIG. 11

# FIG. 12

# FIG. 13

## FIG. 14

FIG. 15

# FIG. 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007118216 A
- JP 2011148146 A